# NEW EUROPEAN PATENT SPECIFICATION

(11) **EP 0 207 771 B2**
(45) Date of publication and mention of the opposition decision: **12.07.1995**
(45) Mention of the grant of the patent: 28.08.1991
(21) Application number: 86305058.9
(22) Date of filing: 30.06.1986
(51) Int. Cl.: G01F 1/58

(54) **Magnetic flowmeter flow tube**
Messrohr für einen magnetischen Strömungsmesser
Tube de mesure pour un débitmètre magnétique

(30) Priority: 03.07.1985 US 751784
(43) Date of publication of application: 07.01.1987
(73) Proprietor: ROSEMOUNT INC., Eden Prairie, MN 55344 (US)
(72) Inventor: Bohn, David C., Eden Prairie Minnesota 55344 (US); Graupmann, Lloyd E., Plato Minnesota 55370 (US)
(74) Representative: Cross, Rupert Edward Blount

(56) References cited:
- EP-A- 0 080 535
- EP-A- 0 113 928
- DE-A- 2 505 427
- DE-A- 3 344 679
- DE-C- 3 132 471
- JP-A-53 125 065
- JP-U-56 164 123
- JP-U-58 195 826
- US-A- 4 388 834
- US-A- 4 499 754
- Gerhard Matthée (Ed.): Lexikon der Fertigungstechnik und Arbeitsmaschinen, 1967, p. 107, "Cermet"

## Description

The present invention relates to a magnetic flowmeter flow tube.

US-A-3750468 discloses a flowmeter that has a ceramic liner.

US-A-4507975 discloses a sensor for a magnetic flowmeter having an oxide ceramic measuring tube, with measuring electrodes comprising metal inserts that are sintered into the ceramic tube during the time that the tube is being sintered. This forms a composite structure (metal-ceramic) with its inherent problems of bonding, weak zones, and possible cracks under highly pressurized fluids. The electrodes form stress concentrators, as well as areas of reduced corrosion and abrasion resistance. Also, the electrodes form protruding surfaces which tend to reduce performance because of suspended particles hitting such electrodes. Sealing is also difficult, as the coefficients of thermal expansion of the ceramic and electrode materials are generally different.

Bonding of two different ceramic materials together to obtain special properties is disclosed in both US-A-3324543 and US-A-4442375 which also discuss the problems involved in obtaining metal to ceramic seals.

US-A-4388834 discloses an electromagnetic flowmeter that has a pair of electrodes of electrically-conductive synthetic plastic material fused in the liner.

US-A-4499754 discloses an electromagnetic flowmeter that uses an insulating liner for lining the measuring pipe, with conductive powder forming conductive paths in an insulating material.

EP-A-0113928 discloses a flow tube comprising a body formed of a low magnetic permeability, electrically non-conductive ceramic material, having a bore therethrough, and at least one region on the body which region or regions has or have a high electrical conductivity or magnetic permeability compared with the material of the body, said region being located between the bore and the outer surface of the body, the body and region or regions forming a sintered monolithic pressure-bearing structure, with said region or regions integrated into the material of the body.

JP-U-58195826 discloses a flow tube with electrodes comprising the same ceramic material as that of the flow tube mixed with a conductive material.

JP-A-53125065 discloses the features of the preamble of Claim 1.

According to this invention there is provided a magnetic flowmeter flow tube comprising a body (10) formed of a low magnetic permeability, electrically non-conductive ceramic material, having a bore (13) therethrough, and at least one region (22, 56) on the body (10) which region or regions has or have a high magnetic permeability compared with the material of the body, said region or regions of high magnetic permeability being located between the bore (13) and the outer surface of the body (10), the body and said region or regions of high magnetic permeability forming a sintered monolithic pressure-bearing structure, with said region or regions of high magnetic permeability integrated into the material of the body (10) characterised in that the or each region of high magnetic permeability is of a composite material of high magnetic permeability comprising the same ceramic material as the body mixed with a second material of high magnetic permeability.

The terms monolith and monolithic are used herein to refer to a tube that is formed as a single component that is a sintered whole and free of any seals to metal parts such as electrodes. The monolithic structure eliminates the solid metal electrodes and minimises stress concentrations, protrusions into the flow stream, and regions of degradation of corrosion and abrasion resistance. The monolithic structure eliminates the need to mount metal electrodes on the flow tube and the need to form seals between the ceramic flow tube and electrodes.

Using a monolithic structure as disclosed herein, a designer is able to shape the necessary electrical lead and contact areas to reduce external noise pick-up, and provide better noise attenuation, particularly when used with low conductivity fluids. Multiple conductive locations in the flow tube can be achieved easier than with conventional, mechanically attached electrodes, and in addition the surface finish of the tube can be very smooth without any crevices or obstructions, and thus no sources of cavitation in the fluid flow. The geometric configuration of the surface of any region which contacts the fluid can be made to accommodate various fluid impurities, sludges, or other foreign materials that have special needs.

Various materials can be used as the second material for the region or regions, including metal powders or ferrites mixed into the basic ceramic material to enhance the electrical conductivity or magnetic permeability in the region or regions desired.

Also according to the invention there is provided a method of manufacturing a flow tube for use in an electromagnetic flowmeter, comprising the steps of forming a tube from a ceramic material; providing at least one recess in the wall of the tube; filling the or each recess with ceramic material the same as that of the body mixed with a second material of high magnetic permeability and sintering the tube to provide a sintered ceramic monolithic pressure-bearing structure with the material filling the recesses integrated into the material of the body.

This invention will now be described by way of example with reference to the drawings, in which:-
Figure 1 is a side elevational view of a flow tube according to the invention;
Figure 2 is a part schematic, part sectional view taken on line 2--2 in Figure 1;
Figure 3 shows a fragmentary portion of a side of the flow tube of Figure 1, showing an enhanced electrically conductive region, with a contact for carrying electrical signals on the surface thereof, and enhanced magnetic permeability portions forming pole pieces;
Figure 4 is a side view of another flow tube according to the invention, showing an electrically conductive path formed on the tube surface that carries electrical signals to the same side of the flow tube;
Figure 5 is a part schematic, part sectional view taken generally along line 5--5 in Figure 4, and illustrating means for providing a magnetic circuit through the flow tube;
Figure 6 is a flow diagram representing a method of constructing a flow tube according to the invention; and
Figure 7 is a part schematic, part sectional view of another flow tube according to the invention, with a non-conductive layer between enhanced electrically conductive regions and a bore of the flow tube.

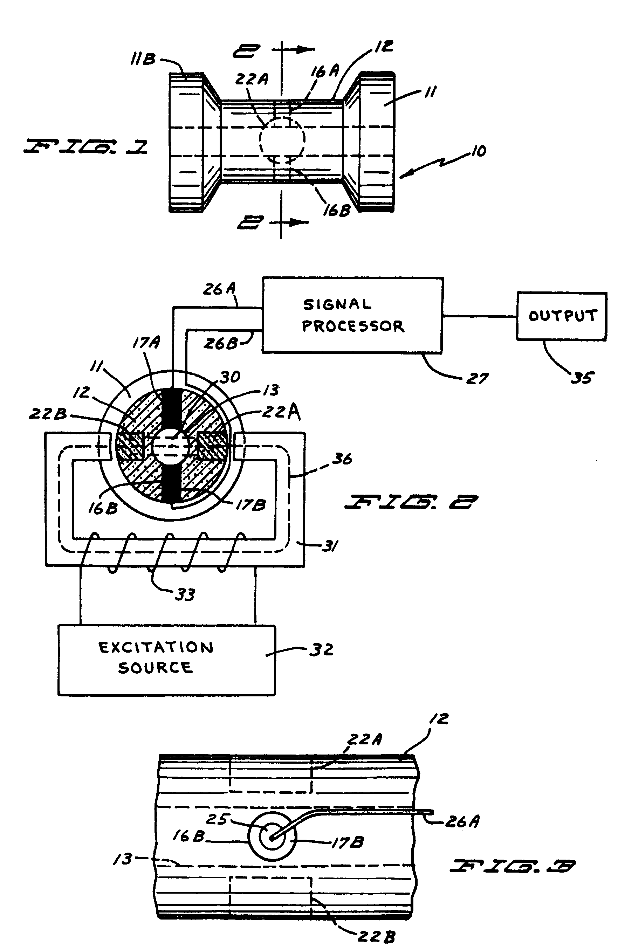

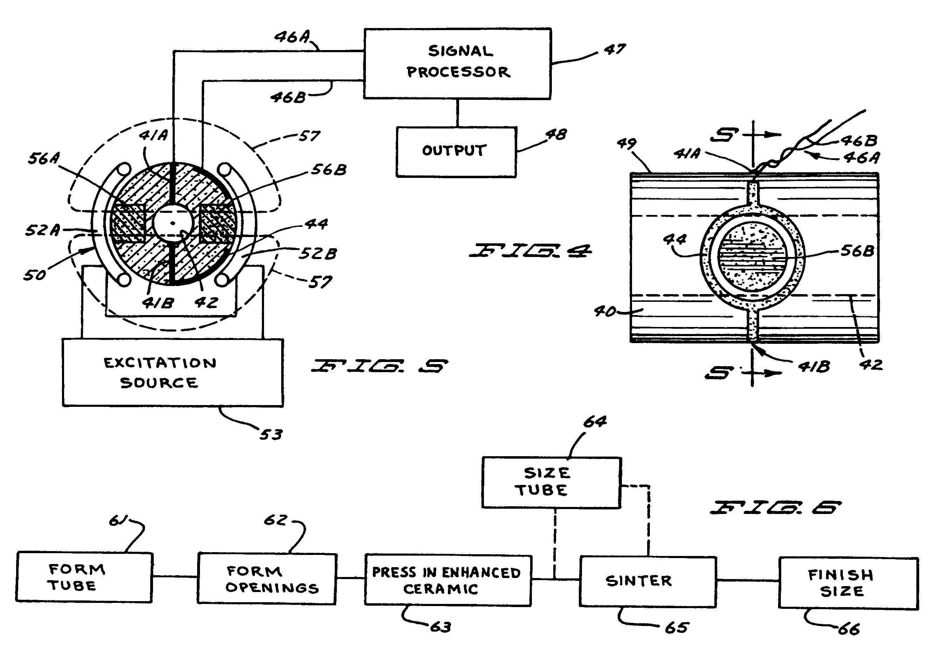

As shown in Figure 1, a ceramic flow tube illustrated generally at 10 has connecting flanges 11A,11B at its opposite ends, and a central flow tube section 12. A through bore (interior surface) indicated at 13 (see Figure 2) carries the fluid, and the flanges 11A,11B permit the connection of the flow tube into a flow pipe. The connections can be made in any desired manner.

As shown, the tube 10 is made of a ceramic material selected for obtaining the necessary properties and capable of being formed in conventional processes. The ceramic material typically will be alumina (Al₂O₃) which is substantially neither electrically conductive nor highly magnetically permeable. The particle size is chosen to provide strength, abrasion resistance, and other desired properties. Typically two microns or smaller size particles are desired, and this will tend to optimize strength and density of the finished part. High purity alumina particles in the range of 99.5% pure alumina, are used. Fiber-reinforced ceramic may also be used for improved strength. Other substantially chemically inert, non-conductive, low permeability, pressure bearing materials may also be used.

Preferably the flow tube is formed by placing the powder, which has been premixed with suitable binders and lubricant so that it is free-flowing, into a die that comprises an outer casing and an inner member to form the bore, and applying pressure to achieve compaction such as by isostatic pressure. Isostatic pressure is a common way of forming ceramic materials in that it applies pressure equally to the powder on all sides to reduce the problems of nonuniformity due to die wall and powder friction.

A metal mandrel is generally used to form the nominal inside diameter of the flowmeter tube, and a pressurized rubber mold forms the outside diameter of the tube. The rubber thus carries the fluid pressure to force the ceramic particles against the central mandrel.

The compacted powder part, after the isostatic pressing, is strong enough to be removed from the mandrel and the rubber mold, if handled carefully.

This is a "green state" which is defined as a ceramic part prior to final densification. The material is relatively fragile and consists of compacted, loosely bonded powder.

The green part can be machined using conventional lathe and cutting tools, if carefully controlled to avoid overstressing the green ceramic material, and also to avoid producing chips, cracks, breakage or porous surfaces. Grinding of the surfaces can be completed, to resemble a spool as shown at 10 in Figure 1, and actually it will be sized about 20% larger than the desired final part dimensions. The green part shrinks approximatey 20% during final firing and densification.

A "bisque" firing is performed, preferably, to stiffen the structure slightly and provide an outer harder layer. After this bisque firing, the part can be handled and worked on without having as much likelihood of damage, but yet can be machined.

Holes which are outlined by lines at 16A, and 16B in Figure 1 are then drilled. The holes are of sufficient size to provide for filling with a ceramic conductive material forming electrically conductive regions 17A anal 17B (enhanced property regions) shown in Figure 2.

In order to form these electrically conductive regions, a suitable conductive ceramic composite is made by mixing the alumina raw material previously used with a conductive metal powder, such that the metal powder is preferably 40-60% by weight of the metal ceramic composite. Additional waxes, gelatins, or other suitable binders are also added to allow the conductive composite to be thoroughly and uniformly mixed so that it can be kneaded and shaped into a ball or plug and then pushed into the drilled hole in the green state magnetic flowmeter liner.

The regions of enhanced electrical conductivity 17A and 17B are shown to be cylindrical in Figure 2. The regions of enhanced electrical conductivity can take a more complicated shape. The shape of the interior surfaces of the regions 17A and 17B can be made larger and generally rectangular in shape to provide a larger surface area and better contact with the fluid in the bore. This provides improved performance with low conductivity fluids. The electrical resistance of the enhanced region can also be varied to provide improved properties. The resistivity can be raised by increasing the percentage of alumina and reducing the percentage of metal powder. The higher resistance of such an enhanced area (compared with a metal electrode) provides a benefit under fault conditions. If a large voltage is applied to the external circuit leads 26A and 26B, the resistance of the enhanced conductivity area limits the current that can flow inside the flow tube bore in response to the large voltage and thereby reduces the possibility of a spark igniting a flamable mixture in the bore of the flow tube. The percentages of powders can also be varied in the region to provide a gradual transition from conducting to non-conducting to further reduce stress concentration.

Additional bores indicated at 22A and 22B may be provided on the side surfaces of the flow tube section 12, centered on the same plane as that defined by the axes of the drilled holes 16A and 16B but having axes 90° from the holes 16A and 16B. The bores 22A and 22B generally will not extend to the central passageway 13, but will be formed as pockets, and then filled with a suitable ceramic material that has enhanced magnetic permeability over the aluminum oxide. These will form magnetic pole regions 22A and 22B generally perpendicular to the holes 16A and 16B. The material in bores 22A and 22B is also enhanced property ceramic material within the definition for purposes of this specification. The pole regions 22A and 22B also preferably include additional powders of conductive material so that the pole regions are conductive and serve as electrostatic shields to the fluid.

Once the enhanced material sections are filled with suitable unsintered ceramic metal composites, a central center bore mandrel is placed in the green liner with the enhanced property ceramic materials in place in the respective bores or drilled holes. The part will again be isostatically pressurized in a rubber mold for compaction of the enhanced material sections. This will force the composite enhanced property material into the holes and the counterbores to achieve a compaction density of this enhanced material which is similar to the rest of the flow tube. While one method has been described here for fabricating a green tube with enhanced regions, such a tube can be fabricated using other methods. For example, the enhanced regions can be isostaticly compacted in separate dies and then used as inserts in the tube as the tube is compacted into the green state.

The metal used for the enhanced property ceramic composite must meet the corrosion criteria required, melt at a temperature greater than the sintering temperature of the ceramic material (approximately 1200-1600° C) and also the enhanced property material must be compatible to air or to other special atmosphere used in the sintering process. Platinum is one of the metal powders that can be used in air atmosphere sintering of alumina ceramic to enhance electrical conductivity. The regions of enhanced magnetic properties may include ferrites mixed with alumina. Magnetically soft ferrite powders are sinterable to produce regions of enhanced permeability. Likewise, the enhanced property ceramic materials for both the magnetic regions 22A and 22B and the conductive regions 17A and 17B have particle sizes close to the size used for the alumina. The compaction of the enhanced property material portions will bring them substantially to the size of the green part tube.

After this compaction, the green part is lightly ground to remove any rough edges created in the second pressing operation of the enhanced property material portions and it is then sintered in a furnace kiln in a conventional manner to remove the pores between the particles, and bond the particles tightly together. The sintering temperature and time is proportional to the inverse of the particle size. Careful control is maintained in using conventional techniques.

After sintering, the part is cooled and then ground to its final size with a smooth surface. The enhanced property ceramic material regions or portions, which can be enhanced from magnetic permeability standpoint or from electrical conductivity standpoint, are essentially monolithic and integrated into the rest of the flow tube and there are no seams, unjoined interfaces, cracks, or other imperfections on the interior surface of the bore or through the walls of the tube. The enhanced property material particles become an integral part of the ceramic material during sintering to substantially eliminate fault lines and imperfections.

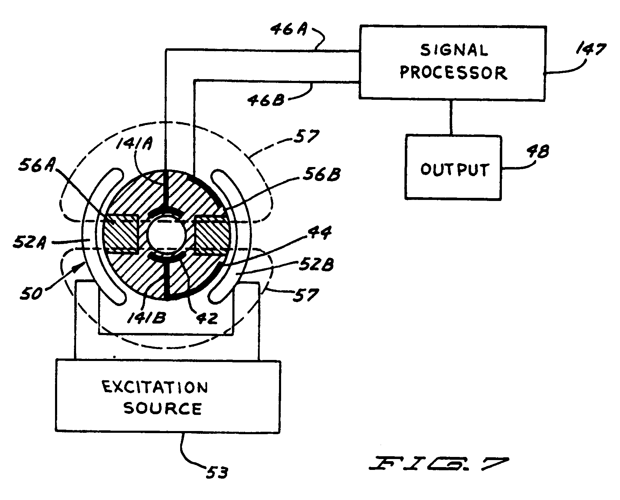

Figure 3 illustrates a contact 25 having a lead wire 26A that is used for connection to signal processing circuitry. The contact 25 can be metalized onto the exterior surface of the enhanced electrical conductive property ceramic material 17B, and then connected into suitable circuitry as desired.

As shown in Figure 2, an operation means for producing a magnetic field 30 in the through bore is provided. This includes an armature 31, and an excitation source 32 that drives a coil 33 with a suitable excitation signal. The signal may be a pulse D.C., polar D.C., an alternating current or other type of coil excitation, to provide a magnetic field between the enhanced property material magnetic regions 22A and 22B, which are perpendicular to the axes of the enhanced property electrically conductive regions 17A and 17B. The regions 17A and 17B as shown are connected with the lead wires 26A and 26B to a signal processing circuit 27 of conventional design that senses the signals generated in the fluid by the Faraday Law interaction between the magnetic field 30 and the fluid flow in bore 13. An output circuitry 35 is connected to the output of the signal processor and is calibrated to represent flow. In Figure 2, a single coil 33 is wound on armature 31. The magnetic field generating apparatus can also be constructed with a pair of coils wired in series, the coils being located near the ends of the armature at the flow tube. The regions 22A and 22B of enhanced permeability improve the performance of the magnetic field generation. They serve to reduce the net air gap in the magnetic circuit and thereby reduce the number of ampere-turns needed to achieve a desired field strength in the flow tube bore.

In Figures 4 and 5, a modified form of the invention is shown, and a tube 40 has regions 41A, 41B formed in the wall thereof of enhanced conductivity materials. The regions 41A,41B extend from the exterior surface 49 to the interior surface 42 of a flow passageway which is provided in the flow tube 40. The region 41B is connected through an enhanced property, electrically conductive ceramic material lead indicated at 44 that extends in a path partially around the periphery of the flow tube, 40 and provides an electrically conductive path for connection to lead wire 46B that leads to a signal processor 47 similar to that shown at 27. An output circuitry 48 is connected to the output of the signal processor and is calibrated to represent flow.

Lead 44 is formed by making a recess of desired size in the surface of the tube 40, and then filled the recess with enhanced property ceramic material (electrically conductive) prior to the second sizing and sintering. The lead 44 is formed at the time of forming fluid contacts and magnetic poles. The routing of lead 44 as well as leads 46A and 468 must be controlled so that there is a minimum amount of coupling between the magnetic field produced and the leads 44, 46A and 46B. This is done by symmetrically arranging the leads near the region 56B in such a fashion as to minimize the induced pickup by the electrode leads.

Additionally, means for generating a magnetic flux indicated at 50 are provided, and include coils 52A and 52B, which are energized through an excitation source 53 of conventional design.

The flow tube 40 also has enhanced poles or regions for enhanced magnetic permeability in the ceramic flow tube, and such poles or regions are shown at 56A,56B in Figure 5. A signal processor 47 would also be connected to or include an output circuit 4B, such as a digital display, recorder or the like.

As described above,
the enhanced property ceramic materials can either be electrically conductive, or have enhanced magnetic properties. The enhanced conductive and magnetic property ceramic materials each transfer an electromagnetic signal through the wall of the flow tube. The enhanced conductive ceramic transfers the flow-induced electromotive force from the fluid to the exterior surface of the tube wall. The enhanced magnetic ceramic transfers magnetic flux from the exterior field producing means to the fluid in the tube, thereby increasing or concentrating flux levels in the fluid over the levels that would otherwise be achieved without the magnetic ceramic. The flow tube wall near these regions of transfer is a ceramic monolith and seals are thus avoided. The enhanced property material can be formed into desired paths, such as on the exterior of the flow tube, merely by defining a path (or hole) and then filling it with the enhanced material and pressing it in place prior to sintering. Also, different types of magnetic circuits can be employed with the magnetic flowmeter within the state of the art.

Representative magnetic flux paths are represented by the dashed lines 36 in Figure 2, and 57 in Figure 5.

Figure 6 shows a schematic representation of a typical method of forming the flow tube including forming the tube as illustrated in step 61, then drilling or otherwise forming openings in step 62, pressing in the enhanced property ceramic materials and, using the mandrel and rubber mold (isostatically or otherwise), forming the added materials having enhanced properties to densify and retain the enhanced property material in place in step 63.

Optimally the tube can be sized by lathe or grinding operation, as represented at 64, and then sintering as represented at 65 is carried out. The cooled tube is then formed to its finished size as represented at 66. The electric leads and the excitation devices are then placed on the tube for use.

The monolithic construction provides a flow tube with fluid contacts and magnetic pole pieces without cracks, flaws or serious imperfections. The tube can be used without an outer metal support tube or cover tube in that the sintered, all ceramic tube, will have sufficient strength for operation.

In Figure 7 a further modified form of the invention is shown. The flowmeter of Figure 7 is similar to that shown in Figure 5 with corresponding numbers identifying similar parts. In Figure 7, enhanced electrically conductive regions 141A and 141B do not extend to a bore 42 of the flow tube. Regions 141A and 141B are substantially insulated from the bore by a portion of the non-conductive material making up the unenhanced regions of the flow tube. The flow induced signal is capacitively coupled through non-conductive material to the enhanced conductive regions. The conductive regions transfer the flow induced signal to circuit leads 46A and 46B which in turn carry the signal to signal processor 147. Signal processor 147 may present high impedances to and accept a voltage signal representative of flow from circuit leads 46A and 46B. Signal processor 147 may alternatively present low impedance inputs to and accept a current signal representative of flow from circuit leads 46A and 46B.

## Claims

1. A magnetic flowmeter flow tube comprising a body (10) formed of a low magnetic permeability, electrically non-conductive ceramic material, having a bore (13) therethrough, and at least one region (22, 56) on the body (10) which region or regions has or have a high magnetic permeability compared with the material of the body, said region or regions of high magnetic permeability being located between the bore (13) and the outer surface of the body (10), the body and said region or regions of high magnetic permeability forming a sintered monolithic pressure-bearing structure, with said region or regions of high magnetic permeability integrated into the material of the body (10) characterised in that the or each region of high magnetic permeability is of a composite material of high magnetic permeability comprising the same ceramic material as the body mixed with a second material of high magnetic permeability.

2. A flow tube as claimed in claim 1, characterised by two of said regions (22A, 22B, 56A, 56B) of high magnetic permeability, disposed on opposite sides of the bore (13).

3. A flow tube as claimed in either of claims 1 and 2 further comprising at least one further region (17, 41, 141) on the body (10) which further region or regions has or have a high electrical conductivity compared with the material of the body, said further region or regions of high electrical conductivity being located between the bore (13) and the outer surface of the body (10), the body and said further region or regions of high electrical conductivity forming a sintered monolithic pressure-bearing structure, with said further region or regions of high electrical conductivity integrated into the material of the body (10), the or each further region of high electrical conductivity being made of a composite material of high electrical conductivity comprising the same ceramic material as the body mixed with a material of high electrical conductivity.

4. A flow tube as claimed in claim 3 wherein said material of high electrical conductivity comprises platinum and said ceramic material is alumina.

5. A flow tube as claimed in either of claims 3 and 4 wherein said ceramic material is alumina and said composite material of high electrical conductivity comprises a metal of high electrical conductivity in the range of from 40 to 60% by weight of said composite material of high electrical conductivity.

6. A flow tube as claimed in any one of claims 3 to 5 wherein said ceramic material is alumina and there is a variation in the percentages of powder in the mixture used to fill the further region to provide a gradual transition from conducting to non-conducting to reduce stress concentration.

7. A flow tube as claimed in any one of claims 3 to 6 characterised by two of said further regions (17A, 17B, 41A, 41B, 141A, 141B) of high electrical conductivity, disposed on opposite sides of the bore (13).

8. A flow tube as claimed in any one of claims 1 to 6, characterised in that at least one of said regions is substantially electrically insulated from the bore (13) by a portion of the body (10) of the flow tube.

9. An electromagnetic flowmeter for measuring a flow of a conductive fluid, characterised by a flow tube as claimed in any one of claims 1 to 8 arranged for the fluid to flow through the bore (13) therein; means (31, 32, 33) for producing a magnetic field inducing a signal representative of flow of the fluid in the bore (13); and means (77) for converting said signal to an output signal.

10. A method of manufacturing a flow tube for use in an electromagnetic flowmeter, comprising the steps of forming a tube from a ceramic material; providing at least one recess in the wall of the tube; filling the or each recess with ceramic material the same as that of the body mixed with a second material of high magnetic permeability and sintering the tube to provide a sintered ceramic monolithic pressure-bearing structure with the material filling the recesses integrated into the material of the body.

11. A method as claimed in claim 10, characterised by providing further recesses in the form of a through hole in the wall of the tube and a recessed path on the exterior of the tube, and filling the hole and the recessed path with the ceramic material mixed with a material of high electrical conductivity.

12. A method as claimed in claim 10 further comprising the step of filling further recesses with ceramic material the same as that of the body mixed with a material of high electrical conductivity.

13. A method as claimed in claims 12 or 13 wherein said material of high electrical conductivity is platinum and said ceramic material is alumina.

14. A method as claimed in either of claims 12 and 13 wherein said ceramic material is alumina and the material of high electrical conductivity is a metal 40 to 60% by weight of the mixture of ceramic material and material of high electrical conductivity.

15. A method as claimed in any one of claims 12 to 14 wherein said ceramic material is alumina and the percentages of powder in the mixture used to fill the hole is varied to provide a gradual transition from conducting to non-conducting to reduce stress concentration.

## Patentansprüche

1. Meßrohr für einen magnetischen Strömungsmesser, das einen Körper (10) aufweist, der aus einem elektrisch nicht leitendem keramischen Material mit geringer magnetischer Permeabilität gebildet ist, und der eine durchgehende Bohrung (13) und mindestens einen Bereich (22, 56) auf dem Körper (10) aufweist, wobei der Bereich oder die Bereiche eine hohe magnetische Permeabilität, verglichen mit dem Material des Körpers, hat oder haben, wobei der Bereich oder die Bereiche mit hoher magnetischer Permeabilität zwischen der Bohrung (13) und der äußeren Oberfläche des Körpers (10) angeordnet ist oder sind, wobei der Körper und der Bereich oder die Bereiche mit hoher magnetischer Permeabilität eine gesinterte, monolithische, druckbelastbare Struktur bildet oder bilden, wobei der Bereich oder die Bereiche mit hoher magnetischer Permeabilität in das Material des Körpers (10) integriert ist oder sind, dadurch gekennzeichnet, daß der oder jeder Bereich mit hoher magnetischer Permeabilität aus einem Verbundwerkstoff mit hoher magnetischer Permeabilität besteht, der das gleiche keramische Material wie der Körper aufweist, das mit einem zweiten Material mit hoher magnetischer Permeabilität vermischt ist.

2. Meßrohr nach Anspruch 1, dadurch gekennzeichnet, daß zwei Bereiche (22A, 22B, 56A, 56B) mit hoher magnetischer Permeabilität an gegenüberliegenden Seiten der Bohrung (13) angeordnet sind.

3. Meßrohr nach einem der Ansprüche 1 und 2, dadurch gekennzeichnet, daß es weiterhin mindestens einen weiteren Bereich (17, 41, 141) auf dem Körper (10) aufweist, wobei der weitere Bereich oder die weiteren Bereiche eine hohe elektrische Leitfähigkeit, verglichen mit dem Material des Körpers hat oder haben, wobei der weitere Bereich oder die weiteren Bereiche mit hoher elektrischer Leitfähigkeit zwischen der Bohrung (13) und der äußeren Oberfläche des Körpers (10) angeordnet ist oder sind, wobei der Körper und der weitere Bereich oder die weiteren Bereiche mit hoher elektrischer Leitfähigkeit eine gesinterte, monolithische, druckbelastbare Struktur bildet oder bilden, und wobei der weitere Bereich oder die weiteren Bereiche mit hoher elektrischer Leitfähigkeit in das Material des Körpers (10) integriert ist oder sind, wobei der oder jeder weitere Bereich mit hoher elektrischer Leitfähigkeit aus einem Verbundwerkstoff mit hoher elektrischer Leitfähigkeit hergestellt ist, der das gleiche keramische Material wie der Körper aufweist, das mit einem Material mit hoher elektrischer Leitfähigkeit vermischt ist.

4. Meßrohr nach Anspruch 3, dadurch gekennzeichnet, daß das Material mit hoher elektrischer Leitfähigkeit Platin aufweist, und das keramische Material Aluminiumoxid ist.

5. Meßrohr nach einem der Ansprüche 3 und 4, dadurch gekennzeichnet, daß das keramische Material Aluminiumoxid ist und der Verbundwerkstoff mit hoher elektrischer Leitfähigkeit ein Metall mit hoher elektrischer Leitfähigkeit im Bereich von 40 bis 60 Gewichtsprozent des Verbundwerkstoffs mit hoher elektrischer Leitfähigkeit aufweist.

6. Meßrohr nach einem der Ansprüche 3 bis 5, dadurch gekennzeichnet, daß das keramische Material Aluminiumoxid ist und es eine Abänderung der Prozentsätze an Pulver in dem zum Füllen des weiteren Bereichs verwendeten Gemisches gibt, um zur Verringerung der Spannungskonzentration einen graduellen Übergang von leitend auf nicht-leitend zu schaffen.

7. Meßrohr nach einem der Ansprüche 3 bis 6, dadurch gekennzeichnet, daß zwei der weiteren Bereiche (17A, 17B, 41A, 41B, 141A, 141B) mit hoher elektrischer Leitfähigkeit an gegenüberliegenden Seiten der Bohrung (13) angeordnet sind.

8. Meßrohr nach einem der Ansprüche 1 bis 6, dadurch gekennzeichnet, daß mindestens einer der Bereiche durch einen Abschnitt des Körpers (10) des Meßrohrs von der Bohrung (13) im wesentlichen elektrisch isoliert ist.

9. Elektromagnetischer Strömungsmesser zum Messen einer Strömung eines leitfähigen Fluids, gekennzeichnet durch ein Meßrohr nach einem der Ansprüche 1 bis 8, das so angeordnet ist, daß das Fluid durch die Bohrung (13) darin strömt; eine Vorrichtung (31, 32, 33) zur Erzeugung eines magnetischen Feldes, das ein die Strömung des Fluids in der Bohrung (13) wiedergebendes Signal induziert; und eine Vorrichtung (77) zur Umwandlung dieses Signals in ein Ausgangssignal.

10. Verfahren zur Herstellung eines Meßrohrs zur Verwendung in einem elektromagnetischen Strömungsmesser, welches folgende Schritte umfaßt:
- Herstellung eines Rohres aus einem keramischen Material;
- Erzeugung mindestens einer Aussparung in der Wand des Rohres;
- Auffüllen der oder jeder Vertiefung mit dem gleichen keramischen Material wie dem des Körpers, das mit einem zweiten Material mit hoher magnetischer Permeabilität vermischt ist; und
- Sintern des Rohres zur Erzeugung einer gesinterten keramischen monolithischen druckbelastbaren Struktur, wobei das Material, das die Vertiefungen ausfüllt, in das Material des Körpers integriert ist.

11. Verfahren nach Anspruch 10, gekennzeichnet durch die Schaffung weiterer Aussparungen in Form eines Durchgangslochs in der Rohrwand und einer vertieften Bahn auf der Außenseite des Rohres und das Auffüllen des Loches und der vertieften Bahn mit dem keramischen Material, das mit einem Material mit hoher elektrischer Leitfähigkeit vermischt ist.

12. Verfahren nach Anspruch 10, dadurch gekennzeichnet, das es weiterhin den Schritt des Auffüllens weiterer Aussparungen mit dem gleichen keramischem Material wie dem des Körpers, das mit einem Material mit hoher elektrischer Leitfähigkeit vermischt ist, aufweist.

13. Verfahren nach Anspruch 12 oder 13, dadurch gekennzeichnet, daß das Material mit hoher elektrischer Leitfähigkeit Platin und das keramische Material Aluminiumoxid ist.

14. Verfahren nach einem der Ansprüche 12 und 13, dadurch gekennzeichnet, daß das keramische Material Aluminiumoxid und das Material mit hoher elektrischer Leitfähigkeit ein Metall mit 40 bis 60 Gewichtsprozent des Gemisches aus dem keramischen Material und dem Material mit hoher elektrischer Leitfähigkeit ist.

15. Verfahren nach einem der Ansprüche 12 bis 14, dadurch gekennzeichnet, daß das keramische Material Aluminiumoxid ist und die Prozentsätze an Pulver in dem zum Füllen des Loches verwendeten Gemisches abgeändert werden, um zur Verringerung der Spannungskonzentration einen graduellen Übergang von leitend auf nicht-leitend zu schaffen.

## Revendications

1. Tube de mesure pour un débitmètre magnétique, comprenant un corps (10) fait d'une matière céramique non électroconductrice de faible perméabilité magnétique et traversé de part en part par une forure (13), et au moins une région (22, 56) sur ce corps (10), cette région ou ces régions ayant une perméabilité magnétique élevée en comparaison du matériau du corps, ladite ou lesdites régions de perméabilité magnétique élevée étant situées entre la forure (13) et la surface extérieure du corps (10), le corps et ladite ou lesdites régions de perméabilité magnétique élevée formant une structure monolithique agglomérée supportant la pression, ladite ou lesdites régions de perméabilité magnétique élevée étant intégrées dans le matériau du corps (10), caractérisé en ce que la région ou chaque région de perméabilité magnétique élevée est faite d'un matériau composite de perméabilité magnétique élevée, composé de la même matière céramique que le corps, en mélange avec une seconde matière ayant une perméabilité magnétique élevée.

2. Tube de mesure selon la revendication 1, caractérisé par deux desdites régions (22A, 22B, 56A, 56B) de perméabilité magnétique élevée, disposées sur des côtés opposés de la forure (13).

3. Tube de mesure selon la revendication 1 ou 2, comprenant en outre au moins une autre région (17, 41, 141) sur le corps (10), cette autre ou ces autres régions ayant une conductivité électrique élevée en comparaison du matériau du corps, cette autre ou ces autres régions de conductivité électrique élevée étant situées entre la forure (13) et la surface extérieure du corps (10), le corps et ladite ou lesdites autres régions de conductivité électrique élevée formant une structure monolithique agglomérée supportant la pression, ladite ou lesdites autres régions de conductivité électrique élevée étant intégrées dans le matériau du corps (10), l'autre ou chaque autre région de conductivité électrique élevée étant faite d'un matériau composite de conductivité électrique élevée, composé de la même matière céramique que le corps, en mélange avec une matière de conductivité électrique élevée.

4. Tube de mesure selon la revendication 3, dans lequel ladite matière de conductivité élevée est constituée par du platine et ladite matière céramique est de l'alumine.

5. Tube de mesure selon la revendication 3 ou 4, dans lequel ladite matière céramique est de l'alumine et ledit matériau composite de conductivité électrique élevée comprend un métal de conductivité électrique élevée dans une proportion de 40 à 60% en poids dudit matériau composite de conductivité électrique élevée.

6. Tube de mesure selon l'une quelconque des revendications 3 à 5, dans lequel ladite matière céramique est l'alumine et il existe une variation des pourcentages de poudre dans le mélange utilisé pour remplir l'autre région, afin de créer une transition progressive entre les parties conductrices et non conductrices dans le but de réduire la concentration des contraintes.

7. Tube de mesure selon l'une quelconque des revendications 3 à 6, caractérisé par deux desdites autres régions (17A, 17B, 41A, 41B, 141A, 141B) de conductivité électrique élevée, disposées sur des côtés opposés de la forure (13).

8. Tube de mesure selon l'une quelconque des revendications 1 à 6, caractérisé en ce que l'une au moins desdites régions est pratiquement isolée électriquement de la forure (13) par une partie du corps (10) du tube de mesure.

9. Débitmètre électromagnétique pour mesurer le débit d'un fluide conducteur, caractérisé par un tube de mesure selon l'une quelconque des revendications 1 à 8, disposé de sorte que le fluide s'écoule à travers la forure (13) qui y est formée; par des moyens (31, 32, 33) pour produire un champ magnétique induisant un signal représentatif du débit du fluide dans la forure (13); et par des moyens (77) pour convertir ledit signal en un signal de sortie.

10. Procédé de fabrication d'un tube de mesure utilisable dans un débitmètre électromagnétique, comprenant les étapes consistant à former un tube en une matière céramique; à former au moins une cavité dans la paroi du tube; à remplir la cavité ou chaque cavité avec la même matière céramique que celle du corps, mélangée à une seconde matière ayant une perméabilité magnétique élevée; et à fritter le tube pour obtenir une structure monolithique en céramique frittée supportant la pression, la matière qui remplit les cavités étant intégrée dans la matière du corps.

11. Procédé selon la revendication 10, caractérisé en ce qu'il est formé d'autres cavités sous la forme d'un trou traversant dans la paroi du tube et d'un chemin en creux sur la surface extérieure du tube, et en ce que le trou et le chemin en creux sont remplis avec la matière céramique mélangée à une matière de conductivité électrique élevée.

12. Procédé selon la revendication 11, comprenant en outre l'étape consistant à remplir lesdites autres cavités avec la même matière céramique que celle du corps, en mélange avec une matière de conductivité électrique élevée.

13. Procédé selon la revendication 11 ou 12, dans lequel ladite matière de conductivité électrique élevée est du platine et ladite matière céramique est de l'alumine.

14. Procédé selon la revendication 12 ou 13, dans lequel ladite matière céramique est de l'alumine et la matière de conductivité électrique élevée est un métal entrant pour 40 à 60% en poids dans la composition du mélange de matière céramique et de matière de conductivité électrique élevée.

15. Procédé selon l'une quelconque des revendications 12 à 14, dans lequel ladite matière céramique est de l'alumine et les pourcentages de poudre dans le mélange utilisé pour remplir le trou varient, afin de créer une transition progressive entre les parties conductrices et non conductrices dans le but de réduire la concentration des contraintes.
